(19) Europäisches Patentamt
European Patent Office
Office européen des brevets

(11) **EP 0 988 206 B1**

(12) **EUROPÄISCHE PATENTSCHRIFT**

(45) Veröffentlichungstag und Bekanntmachung des Hinweises auf die Patenterteilung:
**10.09.2003 Patentblatt 2003/37**

(21) Anmeldenummer: **99920676.6**

(22) Anmeldetag: **15.04.1999**

(51) Int Cl.$^7$: **B61H 7/08**

(86) Internationale Anmeldenummer:
**PCT/EP99/02537**

(87) Internationale Veröffentlichungsnummer:
**WO 99/054184 (28.10.1999 Gazette 1999/43)**

(54) **VERFAHREN ZUR STEUERUNG ODER REGELUNG EINER WIRBELSTROMBREMSE**

METHOD FOR CONTROLLING OR REGULATING AN EDDY-CURRENT BRAKE

PROCEDE POUR LA COMMANDE OU LA REGULATION D'UN FREIN A COURANTS PARASITES

(84) Benannte Vertragsstaaten:
**AT BE CH DE FR IT LI NL**

(30) Priorität: **17.04.1998 DE 19817233**

(43) Veröffentlichungstag der Anmeldung:
**29.03.2000 Patentblatt 2000/13**

(73) Patentinhaber: **KNORR-BREMSE Systeme für Schienenfahrzeuge GmbH 80809 München (DE)**

(72) Erfinder:
- **SAUMWEBER, Eckart**
  **D-82131 Gauting (DE)**
- **LEHMANN, Henry**
  **D-08062 Zwickau (DE)**
- **GRAUTSTÜCK, Heinrich**
  **D-80993 München (DE)**

(56) Entgegenhaltungen:
**EP-A- 0 724 998     WO-A-96/32172**
**FR-A- 2 098 116**

**Beschreibung**

Die Erfindung betrifft ein Verfahren zur Steuerung oder Regelung einer Wirbeistrombremse, insbesondere an bzw. in einem Schienenfahrzeug, bei dem die Geschwindigkeit des Fahrzeuges ermittelt wird sowie eine Steueroder Regeleinrichtung zur Durchführung des Verfahrens und eine Wirbelstrombremse gemäß dem Oberbegriff des Anspruches 9.

Bei der linearen Wirbelstrombremse handelt es sich um ein Bremssystem, das sich durch vollkommene Verschleißfreiheit und Haftwertunabhängigkeit auszeichnet. In der neuzeitlichen Rad-Schiene-Technik sind derartige Bremssysteme unverzichtbar. Die haftwertunabhängige und berührungslose lineare Wirbelstrombremse wird insbesondere als hochwirksame Schnell- und Betriebsbremse eingesetzt. Sie besteht aus einem Eisenjoch mit mehreren Polkemen. Elektrische Spulen erregen dabei die Bremse magnetisch so, daß alternierende, magnetische Nord- und Südpole entstehen. Bei Bewegung der Wirbelstrombremse über die Schiene ergeben sich durch die zeitlichen Flußänderungen elektrische Spannungen und Wirbelströme. Dieses sekundäre Magnetfeld der Wirbelströme ist dem Magnetfeld der Bremse entgegengerichtet. Hieraus ergibt sich eine entgegengesetzt zur Fahrtrichtung wirkende horizontale Kraftkomponente, die Bremskraft.

Bei einer Wirbelstrombremse sind die Polkeme, die durch Stromerregung die obengenannten Nord- und Südpole ergeben, entlang eines Balkens hintereinander angeordnet. Dieser Balken stützt sich im aktiven Zustand auf dem Radsatzlagergehäuse des Drehgestelles ab, wodurch ein gleichmäßiger Luftspalt von 5 -7 mm zur Schienenoberkante sicher eingehalten werden kann. Betreffend den Aufbau von linearen Wirbelstrombremsen wird auf die nachfolgenden Schriften:

- Bremsen für Schienenfahrzeuge, Handbuch Bremstechnische Begriffe und Werte, Knorr-Bremse AG München, 1990
- Dr. Wolfgang Schlosser "Neue Bremssysteme als integraler Bestandteil innovativer Fahrzeugkonzepte", ZEV + DET Glasers Analen, Heft 2/3 1997, Seiten 121-128
- DE 196 18 903 C2
- Saumweber, E., Kröfer, U., Bemdt, P.J.: "The Principles of Operation of Track Brakes, Speech held on the Occasion of the International Conference on Railway Braking at the University of York, 26-27 September 1979
- Saumweber, E., Gerum, E., Bemdt, P. J.: "Grundlagen der Schienenfahrzeugbremse", AET Archiv für Eisenbahntechnik 43, Hestra-Verlag, 1990
- Hendrichs, W.: "Versuche mit linearen Wirbelstrombremsen-Messungen mechanischer Größen", ZEV Glas. Ann. 109 (1985), Nr. 9 (S. 375- 381)
- Hendrichs, W.: "Versuche mit linearen Wirbelstrombremsen-elektrischer Teil", EB 83 (1985), Heft 10
- Hendrichs, W.: "Das thermische Verhalten der Wirbelstrombremse", EB 84 (1986), Heft 5
- Dobler, R.: "Die lineare Wirbelstrombremse - Erkenntnisse aus dem Versuchseinsatz bei der Deutschen Bundesbahn", ETR 37 (1988), Heft 1/2
- Kröger, U.: "Prinzip, Entwicklung und Konstruktion der linearen Wirbelstrombremsen", ZEV Glasers Annalen 109 (1985), Nr. 9
- Kröger, U.: "Bremseinrichtungen im ICE", ETR 38 (1989), Heft 9
- Hendrichs, W.: "Bremstechnische Versuche mit dem ICE-Vaus hohen Geschwindigkeiten", ETR 37 (1989), Heft 1/2
- Schlosser, W.: "Brake Systems for the German State Railways High-Speed "ICE" passanger train, The Air Brake Association, 79th Annuals Technical Conference, Chicago 1987"
- Cauwel, Ph., Frechède, L.: "Les freins ä courants de Foucault", Revue generale des chemins de fer, 10 (1996), S. 5
- van Oostveen, H., Siezen, R.: "Erfahrungen mit Permanentmagnet-Schienenbremsen", ZEV + DET Glas. Ann. 121 (1997), Nr. 12 (S. 613 -617)

deren Offenbarungsgehalt in die vorliegende Anmeldung voll umfänglich mit aufgenommen wird, verwiesen.

Eine Ausführungsform einer elektrischen Wirbelstrombremse einer sog. EWB ist seit zwei Jahren in einem TGV-Triebkopf der französischen Staatsbahn betriebsmäßig im Einsatz. Bei einer weiteren Ausführungsform einer Wirbelstrombremse bildet der Integralträger gleichzeitig den magnetischen Rückschluß für die Spulen und das tragende Teil zur Abstützung der Anzugskräfte über die Tragarme auf die Achslager. Für eine parallele Führung über der Schiene sorgen zwei Spurhalter, die zusammen mit den Integralträgern einen steifen Bremsrahmen bilden. Die Bremskräfte werden über beidseitig gelenkig gelagerte Bresmkraftstützen auf das Drehgestell übertragen. Vier Luftbälge halten den Bremsrahmen, wenn nicht gebremst wird, mit Druckluft in Hochlage. Im Bremsfall wird der Rahmen auf die Achslager abgesenkt, wobei im nicht erregten Zustand ein Luftspalt von 7 mm zwischen Bremse und Schiene eingestellt ist.

Für konstanten Luftspalt und konstanten Erregerstrom zeigt die Bremskraft einer Wirbelstrombremse über dem gesamten oberen Geschwindigkeitsbereich einen idealen, konstanten Verlauf und fällt erst bei Geschwindigkeiten unter 50 km/h ab. Die Anzugskraft nimmt hingegen mit fallender Geschwindigkeit progressiv zu. Aufgrund der endlichen Steifigkeit des Integralträgers ist es daher problematisch, einen konstanten Luftspalt einzuhalten. Aufgrund der sehr hohen mechanischen Belastung des Integralträgers besteht die Gefahr des Berührens der Schiene. Um dies zu verhindern wird im Geschwindigkeitsbereich von 200 bis 100 km/h mit fallender Geschwindigkeit stetig ein Balgdruck aufgebaut.

Die EP-A1-0724998 befaßt sich mit den Problem des Konstanthaltens des Luftspaltes zwischen Schiene und Bremse und löst es mit einer Einrichtung zur Entlastung der Schienenbresnse in Abhängigkeit der Anzugskraft zwischen Schiene und Bremse.

Die Einsetzbarkeit der linearen elektrischen Wirbelstrombremse wird im wesentlichen durch die Temperaturerhöhung, die sich beim Bremsen insbesondere in den Erregerspulen ergibt, begrenzt.

So muß, um die lineare Wirbelstrombremse auch bei Schnellbremsungen einsetzen zu können, stets eine sogenannte Temperaturreserve für Schnellbremsungen vorgehalten werden, d.h. es werden Betriebsbremsungen nur mit einer derartigen Bremskraft durchgeführt, daß die Temperaturerwärmung aufgrund der Betriebsbremsung stets unterhalb einer festgesetzten konstanten Temperatur bleibt, die die Grenze des Systems für Betriebsbremsungen darstellt, und technisch bedingt ist.

Aufgrund der vorzuhaltenden Temperaturreserve, vor allem bei hohen Geschwindigkeiten, konnte die Bremskraft der zuvor beschriebenen linearen Wirbelstrombremse für Betriebsbremsungen nur unzureichend genutzt werden.

Es ist somit Aufgabe der Erfindung, ein Verfahren und ein Steuer- bzw. Regelsystem anzugeben, mit dem diese Nachteile überwunden werden. Insbesondere soll die lineare Wirbelstrombremse über den gesamten Geschwindigkeitsbereich für Betriebsbremsungen optimal zur Verfügung stehen.

Erfindungsgemäß wird diese Aufgabe dadurch gelöst, daß bei einem Verfahren zur Steuerung oder Regelung einer Wirbelstrombremse in Abhängigkeit mindestens von der Fahrzeuggeschwindigkeit eine vorbestimmte Grenztemperatur für Betriebsbremsungen für die Wirbelstrombremse gesetzt wird, wobei bei Erreichen der gesetzten Grenztemperatur die Wirbelstrombremse für betriebliche Bremsungen abgeschaltet oder zurückgenommen wird.

Um bei mehrfach hintereinander durchgeführten Betriebsbremsungen zu berücksichtigen, daß die Temperaturerhöhung nur langsam abgebaut wird, ist es vorteilhaft, die Grenztemperatur für Betriebsbremsungen vor und/oder während jeder Betriebsbremsung neu zu ermitteln und neu zu setzen. Durch die Geschwindigkeitsabhängigkeit der Grenztemperatur für Betriebsbremsungen ergibt sich bei Abnehmen der Geschwindigkeit eine Erhöhung der Grenztemperatur und somit kann bei betrieblichen Bremsungen mit erhöter Bremskraft und/oder Bremszeit gefahren werden.

Hierbei ist es vorteilhaft, auch die zu einem späteren Zeitpunkt wesentlich höhere Fahrzeuggeschwindigkeit zu berücksichtigen.

Neben dem abhängigen Parameter Fahrzeuggeschwindigkeit für die zu setzende Grenztemperatur für Betriebsbremsungen können auch noch eine oder mehrere der nachfolgenden Größen berücksichtigt werden: der Achsabstand, der Temperaturgradient sowie die Außentemperatur.

Neben dem Verfahren stellt die Erfindung auch eine Steuer-/Regeleinrichtung für eine Wirbelstrombremse zur Durchführung dieses Verfahrens zur Verfügung. Vorteilhafterweise umfaßt die Steuer-/Regeleinrichtung Mittel zum Erfassen der Fahrgeschwindigkeit, Mittel zum Erfassen der Bremsanforderungen, Mittel zum Erfassen der durch die Bremsanforderungen verursachten Temperaturerhöhungen sowie ein Steuergerät.

Die erfindungsgemäße Steuer-/Regeleinrichtung ist dadurch gekennzeichnet, daß in Abhängigkeit von der Fahrgeschwindigkeit im Steuergerät eine Grenztemperatur gesetzt wird und das Steuergerät die Wirbelstrombremse abschaltet, wenn die Grenztemperatur für Betriebsbremsungen aufgrund der durch die Betriebsbremsung verursachten Temperaturerhöhung erreicht ist.

Neben dem Verfahren und der Steuer-/Regeleinrichtung stellt die Erfindung auch eine Wirbelstrombremse zur Verfügung, die dadurch gekennzeichnet ist, daß sie eine Steuer- oder Regeleinrichtung umfaßt, mit der in Abhängigkeit von mindestens der Geschwindigkeit des Schienenfahrzeuges der magnetische Fluß durch die Polkeme begrenzt oder unterbrochen wird.

In einer besonders kompakten Ausführungsform der Erfindung ist die Steuer-/Regeleinrichtung der Wirbelstrombremse unmittelbar in die Wirbelstrombremse integriert.

Als Steuer- oder Regeleinrichtung kann in einer weitergebildeten Ausführungsform ein Stromregler vorgesehen sein, der in der Regel durch Leistungs-Halbleiterbauelemente wie beispielsweise Thyristoren ausgebildet wird. Der Stromregler kann eine Meßschaltung zur Messung der Ist-Stromstärke umfassen sowie einen geschlossenen Regelkreis, bei dem die Stromstärke auf einen vorgegebenen Sollwert in Abhängigkeit beispielsweise von der Grenztemperatur geregelt wird.

Die Erfindung soll nachfolgend anhand von Ausführungsbeispielen näher beschrieben werden.

Es zeigen:

Fig. 1 den theoretischen Verlauf von Bremskraft und Anzugkraft einer elektrischen Wirbelstrombremse in Abhängigkeit von der Geschwindigkeit

Fig. 2 den gemessenen Verlauf von Bremskraft, Anzugkraft und Luftspalt über der Geschwindigkeit

Fig. 3 den Verlauf von Balgdruck und elektrischer Erregung über der Geschwindigkeit

Fig. 4 den Temperaturverlauf über der Zeit bei einer Betriebsbremsung

Fig. 5 die für eine Schnellbremsung benötigte Temperaturreserve in Abhängigkeit von der Fahrgeschwindigkeit

Fig. 6 die Grenztemperatur für eine Betriebsbremsung in Abhängigkeit von der Geschwindigkeit

Fig. 7 die erfindungsgemäße Steuer-/Regeleinrichtung gemäß der Erfindung.

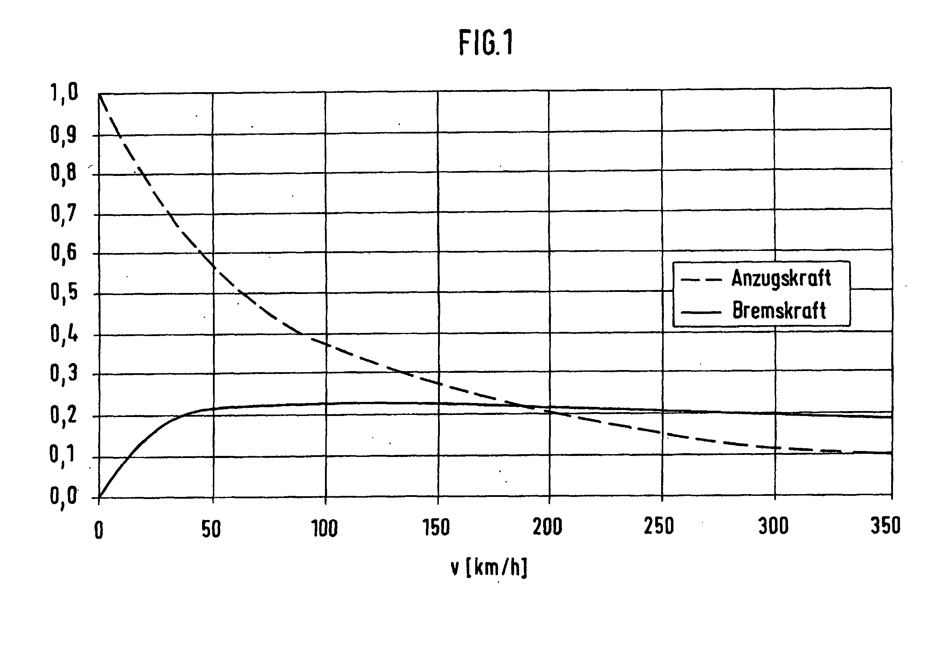

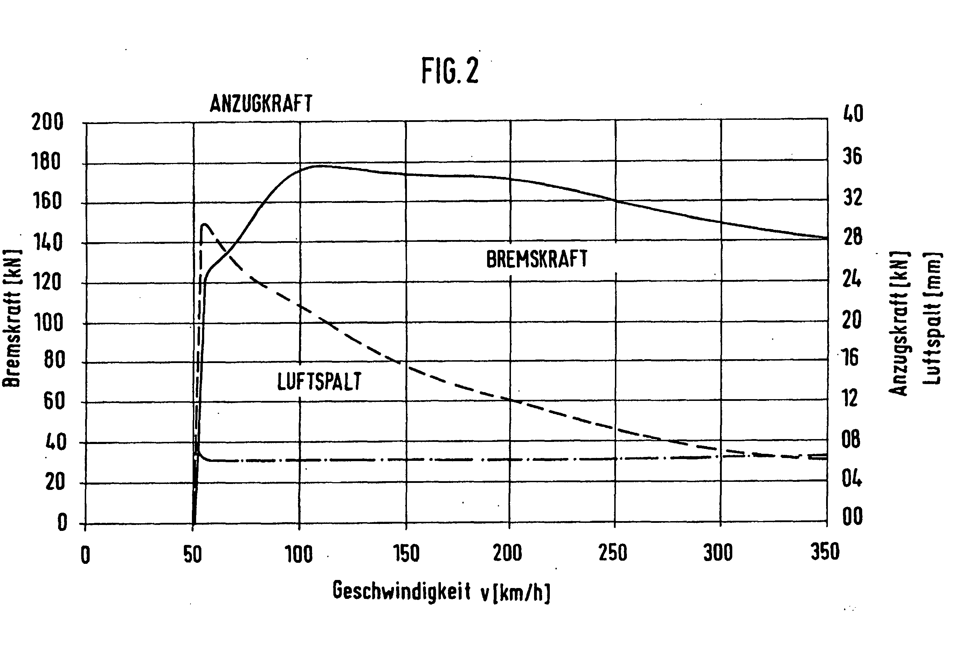

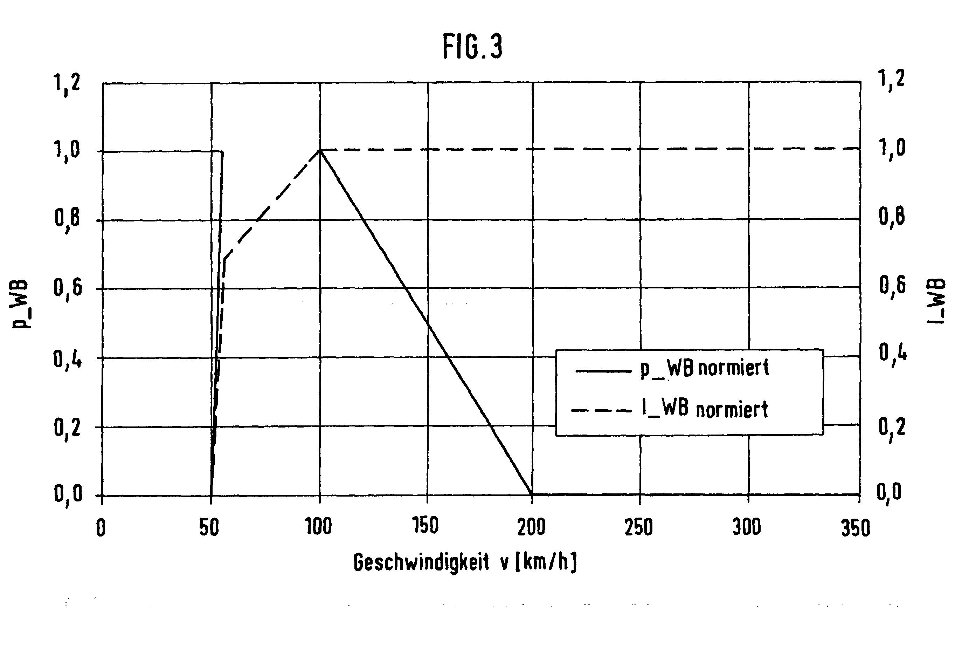

In Fig. 1 ist die theoretische Kennlinie für Bremskraft und Anzugskraft bei konstantem Luftspalt und konstantem Erregerstrom einer Wirbelstrombremse gezeigt. Fig. 2 zeigt den bei Versuchsverfahren gemessenen Verlauf. Die Wirbelstrombremse zeigt über dem gesamten oberen Geschwindigkeitsbereich einen idealen, konstanten Verlauf und fällt erst bei Geschwindigkeiten unter 50 km/h ab. Die Anzugskraft nimmt hingegen mit fallender Geschwindigkeit progressiv zu. Aufgrund der endlichen Steifigkeit des Integralträgers ist es daher problematisch, einen konstanten Luftspalt einzuhalten. Aufgrund der sehr hohen mechanischen Belastung des Integralträgers besteht die Gefahr des Berührens der Schiene. Um dies zu verhindern wird im Geschwindigkeitsbereich von 200 bis 100 km/h mit fallender Geschwindigkeit stetig ein Balgdruck P_WB aufgebaut, wie in Fig. 3 dargestellt, und unterhalb 100 km/h die elektrische Erregung I_WB leicht zurückgenommen. Dadurch gelingt es, im gesamten Geschwindigkeitsbereich den Luftspalt nahezu konstant zu halten ohne den Integralkörper zu überlasten.

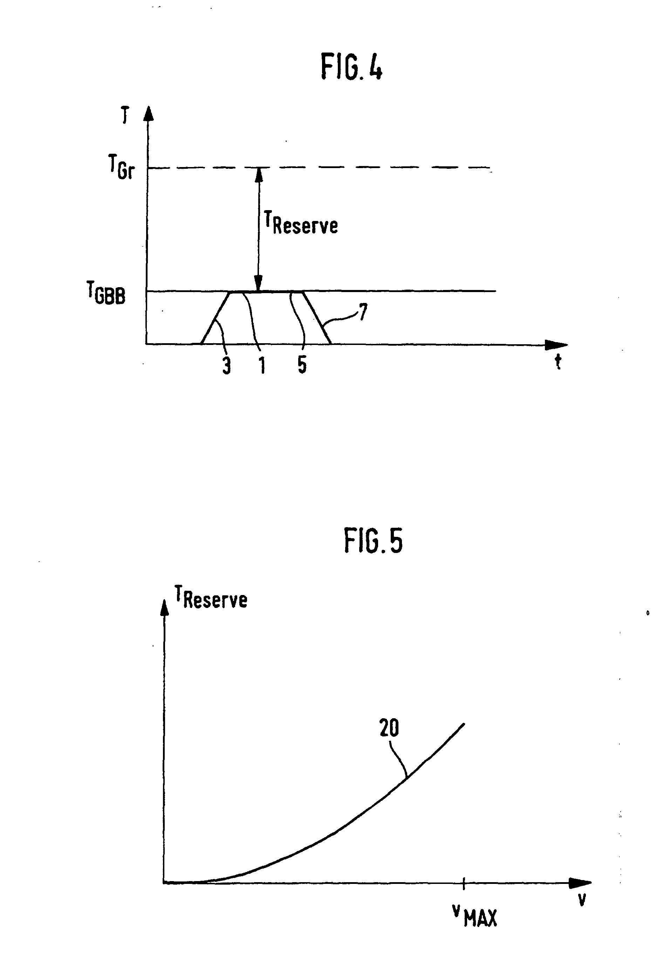

In Figur 4 ist der Temperaturverlauf 1 für eine Betriebsbremsung im zeitlichen Verlauf dargestellt.

Wie deutlich zu erkennen, steigt nach Einschalten der linearen Wirbelstrombremse die Temperatur aufgrund der Wirbelströme in der Schiene an. Dieser Temperaturanstieg ist mit 3 bezeichnet. Wird eine vorgegebene Grenztemperatur $T_{GBB}$ für Betriebsbremsungen erreicht, so wird die lineare Wirbelstrombremse abgeschaltet, die Temperatur verharrt für eine gewisse Zeit im Bereich 5 auf der Grenztemperatur $T_{GBB}$ und fällt im Bereich 7 wieder auf den Wert vor der Bremsung ab. Wird nach Erreichen der Grenztemperatur bei der Betriebsbremsung eine Schnellbremsung eingeleitet, so steigt die Temperatur um die eingezeichnete Temperaturreserve $T_{Res}$ auf den Grenztemperaturwert $T_{Gr}$ für Schnellbremsung an, der durch den technischen Aufbau der Bremse bedingt ist.

Bei den bislang bekannten Systemen war der Grenzwert für Betriebsbremsungen als Konstante fest vorgegeben. Sobald aufgrund der Beziehung R = U/I ein bestimmtes Spannungs- bzw. Temperaturniveau erreicht wurde, wurde die Bremse für betriebliche Bremsungen abgeschaltet. Wie in Fig. 5 zu sehen, steigt die für die Schnellbremsungen benötigte Reservetemperatur $T_{Res}$ mit steigender Geschwindigkeit gemäß der Funktion 20 stark an.

Um bei allen Geschwindigkeiten eine ausreichende Temperaturreserve zur Verfügung zu stellen, mußte nach dem Stand der Technik $T_{GBB}$ an die höchste Fahrgeschwindigkeit angepaßt werden, d.h. bei niedrigen Fahrgeschwindigkeiten wurde das Leistungsvermögen der linearen Wirbelstrombremse aufgrund der wegen der sehr großen Temperaturreserve $T_{Res}$ sehr niedrigen Grenztemperatur $T_{GBB}$ nur ungenügend ausgenutzt.

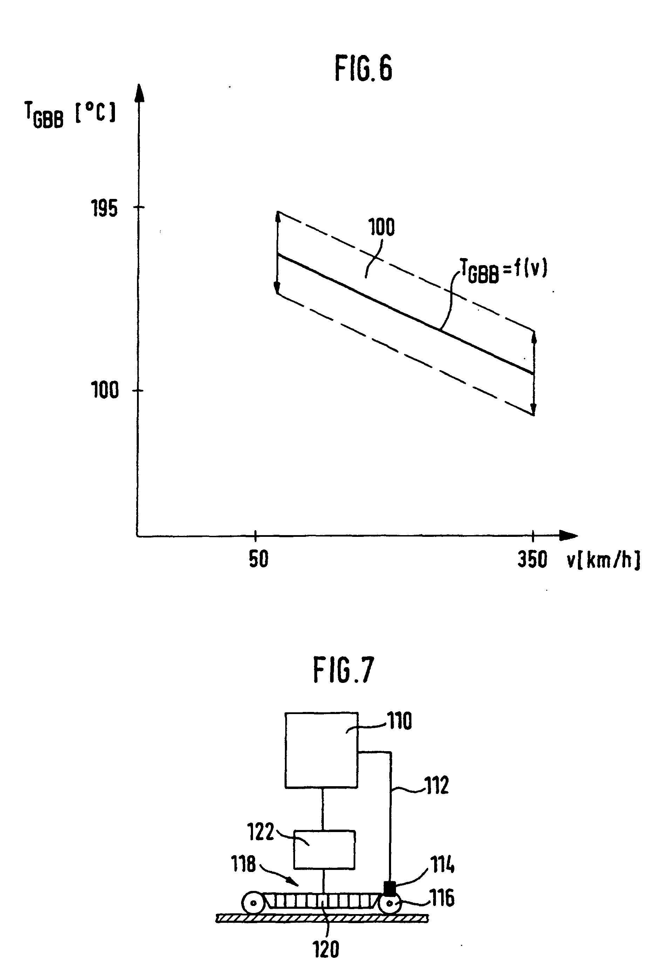

Gemäß der Erfindung wird nunmehr anstelle eines festen Wertes $T_{GBB}$ ein geschwindigkeitsabhängiger Wert vorgegeben, wie in Fig. 6 dargestellt.

Aufgrund der bei niedrigen Temperaturen für Schnellbremsungen nur sehr niedrig vorzuhaltenden Temperaturreserven beträgt der Grenzwert $T_{GBB}$ für Betriebsbremsungen bei 50 km/h beispielsweise 195° C und fällt im einfachsten Fall linear mit der Fahrgeschwindigkeit ab, beispielsweise auf $T_{GBB}$ = 100° C bei Geschwindigkeiten von 350 km/h.

Wie beispielsweise aus Dr. Wolfgang Schlosser "Neue Bremssysteme als integraler Bestandteil innovativer Fahrzeugkonzepte" ZEV + DET GLASERS ANNALEN, Heft 2-3, 1997, Seite 128, bekanntgeworden ist, deren Offenbarungsgehalt in die vorliegende Anmeldung voll umfänglich mit eingeschlossen wird, die lineare Wirbelstrombremse, wie aus Fig. 3 hervorgeht, erst für Geschwindigkeiten oberhalb 50 km/h eingesetzt wird. Der Grund hierfür liegt in der stark ansteigenden vertikalen Anzugkraft bei niedrigen Geschwindigkeiten. Bei niedrigen Geschwindigkeiten ist es daher notwendig, um den Tragbalken und das Drehgestell nicht für unnötig hohe Anzugkräfte auslegen zu müssen, die lineare Wirbelstrombremse abzuschalten.

Neben der Vorgabe der Grenztemperatur $T_{GBB}$ für Betriebsbremsungen als lineare Funktion der Geschwindigkeit, wie in Fig. 6 dargestellt, ist es auch möglich, weitere Einflußgrößen zu berücksichtigen. Beispielsweise kann dies der Achsabstand, der Temperaturgradient sowie die Außentemperatur sein. Entsprechend diesen Einflußgrößen kann die Kennlinie f(v) entweder nicht linear verlaufen oder in den schraffiert eingezeichneten Bereich 100 verschoben werden. Verläuft die Kennlinie f(v) nicht linear, so weist die Funktion f(v) zumindest über einen wesentlichen Geschwindigkeitsbereich eine negative Steigung auf.

Als besonders bevorzugte Funktion einer nichtlinearen Kennlinie haben sich Polynome

$$f(v) = a + bv + cv^2 + ...$$

n-ter Ordnung herausgestellt. Bei derartigen Funktionen können die Parameter a, b, c in Abhängigkeit von einer Auswahl der nachfolgenden Eigenschaften

- Beschleunigungsvermögen des Zuges
- Temperaturverhalten der Bremse (Erwärmung, Abkühlung)
- Verzögerung bei Schnellbremsung

ermittelt werden.

Fig. 7 zeigt schematisch eine Ausführungsform einer Steuer-/Regeleinrichtung für das erfindungsgemäße Verfahren. Schematisch dargestellt ist das Steuergerät 110, das über Leitung 112 mit dem Fahrgeschwindigkeitssensor 114 verbunden ist. Der Fahrgeschwindigkeitssensor 114 kann ein am Rad 116 des Drehgestelles 118 des Schienenfahrzeugs angeordneter Drehzahlsensor sein. Über Fahrgeschwindigkeitssensor 114 wird ein Fahrgeschwindigkeitssignal dem Steuergerät 110 übermittelt. In Abhängigkeit von der Fahrgeschwindigkeit wird der Temperaturgrenzwert $T_{GBB}$ für Betriebsbremsungen gesetzt. Wird nunmehr eine Betriebsbremsung angefordert, so werden die Spulen zur Erregung der Magnetfelder der linearen Wirbelstrombremse 120 über die Stromversorgungseinrichtung 122 so lange mit Strom versorgt, bis die Grenztemperatur $T_{GBB}$ für Betriebsbremsungen erreicht ist. Wird dies festgestellt, so wird die Stromzufuhr unterbrochen, d.h. die lineare Wirbelstrombremse abgeschaltet.

In einer fortgebildeten Ausführungsform kann vorgesehen sein, daß anstelle einer Abschaltung eine Regelung der Stromstärke der erregenden Spulen der linearen Wirbelstrombremse vorgenommen wird, und zwar derart, daß die Bremskraft der linearen Wirbelstrombremse stets so geregelt wird, daß eine vorgegebene Temperaturgrenze $T_{GBB}$ für Betriebsbremsungen nicht überschritten wird. Derartige Regelungen sind dem Fachmann weithin bekannt und können beispielsweise mit Hilfe eines geschlossenen Regelkreises vorgenommen werden oder mit Hilfe einer Gradientenregelung.

In einer besonders vorteilhaften Ausführungsform können die für den Betrieb der elektrischen Wirbelstrombremse (EWB) notwendigen Regelungs- und Steuerungsfunktionen sowie die Diagnose in einem Antriebssteuergerät (ASG) und Bremssteuergerät (BSG) durchgeführt werden, wobei Informationen über den multifunction vehicle bus (MVB) ausgetauscht und die Stellglieder (Strom, Druck) entsprechend angesteuert werden. Im ASG und BSG erfolgt eine laufende Simulation und Überwachung der Spulentemperatur. Dadurch wird sichergestellt, daß die EWB selbst bei häufigen Betriebsbremsungen für mindestens eine Schnellbremsung verfügbar ist, indem bei Erreichen einer geschwindigkeitsabhängigen Grenztemperatur die EWB für Betriebsbremsungen erfindungsgemäß zurückgenommen wird.

Durch die vorliegende Erfindung wird somit erstmals ein Regelverfahren und eine Steuereinrichtung sowie eine lineare Wirbelstrombremse angegeben, die die Temperaturgrenze $T_{GBB}$ für Betriebsbremsungen in Abhängigkeit von der Fahrgeschwindigkeit setzt, wodurch das Leistungsvermögen der linearen Wirbelstrombremse besser als bislang ausgenutzt werden kann.

Bezugszeichenliste

| | |
|---|---|
| 1: | Temperaturverlauf |
| 3: | Temperaturanstieg |
| 5: | Bereich konstanter Temperatur |
| 7: | Temperaturabfall |
| 20: | Funktion $T_{Res}$ (v) |
| 100: | Kennlinienbereich |
| 110: | Steuergerät |
| 112: | Steuerleitung |
| 114: | Fahrgeschwindigkeitssensor |
| 116: | Rad |
| 118: | Drehgestell |
| 120: | Lineare Wirbelstrombremse |
| 122: | Stromversorgungseinrichtung |
| $T_{GBB}$: | Grenztemperatur für Betriebsbremsungen |
| $T_{Res}$: | Temperaturreserve |
| $T_{Gr}$: | Grenztemperaturwert technisch bedingt, der bei Schnellbremsung noch erreicht werden darf |

**Patentansprüche**

1. Verfahren zur Steuerung und/oder Regelung einer Wirbelstrombremse (120), insbesondere an einem Schienenfahrzeug, mit folgenden Schritten:

   1.1 es wird die Geschwindigkeit des Fahrzeuges ermittelt;
   1.2 in Abhängigkeit mindestens von der Fahrgeschwindigkeit wird eine Grenztemperatur $T_{GBB}$ für Betriebsbremsungen mit der Wirbelstrombremse gesetzt;
   1.3 bei Erreichen der gesetzten Grenztemperatur $T_{GBB}$ wird die Wirbelstrombremse für betriebliche Bremsungen abgeschaltet oder zurückgenommen.

2. Verfahren nach Anspruch 1, **dadurch gekennzeichnet, daß** die Grenztemperatur für Betriebsbremsungen $T_{GBB}$ vor jeder und/oder während der Betriebsbremsung neu ermittelt und gesetzt wird.

3. Verfahren nach Anspruch 1 oder 2, **dadurch gekennzeichnet, daß** die Grenztemperatur für Betriebsbremsungen $T_{GBB}$ in Abhängigkeit von mindestens einer weiteren oder mehrerer der nachfolgenden Größen gesetzt wird:

   - der Außentemperatur
   - der zulässigen Höchstgeschwindigkeit eines Streckenabschnittes.

4. Verfahren nach einem der Ansprüche 1 bis 3, **dadurch gekennzeichnet, daß** die Funktion zur Bestimmung der Grenztemperatur $T_{GBB}$ ein Polynom oder eine Gerade ist.

**5.** Verfahren nach Anspruch 4, **dadurch gekennzeichnet, daß** die Funktion zumindest über einen wesentlichen Geschwindigkeitsbereich eine negative Steigung aufweist.

**6.** Verfahren nach einem der Ansprüche 4 oder 5, **dadurch gekennzeichnet, daß** die Parameter (a, b, c ...) der Funktion f(v) = a + bv + cv$^2$ + ... in Abhängigkeit von einer Auswahl folgenden Eigenschaften ermittelt werden:

- Beschleunigungsvermögen des Zuges
- Temperaturverhalten der Bremse (Erwärmung/Abkühlung)
- Verzögerung bei Schnellbremsung

**7.** Wirbelstrombremse mit einer Steuer-/Regeleinrichtung zur Durchführung des Verfahrens gemäß einem der Ansprüche 1 bis 6 mit Mitteln zum Erfassen der Fahrgeschwindigkeit (114) Mitteln zum Erfassen von Bremsanforderungen einem Steuergerät; die Steuer-/Regeleinrichtung ist **dadurch gekennzeichnet, daß** in Abhängigkeit von der Fahrgeschwindigkeit im Steuergerät (110) eine Grenztemperatur für Betriebsbremsungen T$_{GBB}$ gesetzt wird und das Steuergerät die Wirbelstrombremse abschaltet oder zurücknimmt, wenn die Grenztemperatur für Betriebsbremsungen T$_{GBB}$ aufgrund der durch die Bremsanforderung verursachten Temperaturerhöhung erreicht ist.

**8.** Wirbelstrombremse gemäß Anspruch 7, **dadurch gekennzeichnet, daß** Mitteln zum Erfassen der durch die Bremsanforderung verursachten Temperaturerhöhung vorgesehen sind.

**9.** Wirbelstrombremse, die oberhalb des Schienenkopfes an einem Schienenfahrzeug angeordnet ist mit mehreren Polkernen sowie mehreren Spulen zur Erzeugung eines magnetischen Flusses durch die Polkerne und den Schienenkopf; **dadurch gekennzeichnet, daß** die Wirbelstrombremse (120) eine Steuer- oder Regeleinrichtung (110) umfaßt, mit der der magnetische Fluß in Abhängigkeit von einer mindestens aufgrund der Geschwindigkeit vorgegebenen Grenztemperatur für Betriebsbremsungen T$_{GBB}$ variiert oder unterbrochen wird.

**10.** Wirbelstrombremse gemäß Anspruch 9, **dadurch gekennzeichnet, daß** die Steuer-/Regeleinrichtung der Wirbelstrombremse in der zugseitigen Bremssteuerung integriert ist.

**11.** Wirbelstrombremse nach Anspruch 9 oder 10, **dadurch gekennzeichnet, daß** die Steuer- oder Regeleinrichtung ein Stromregler ist, der durch eine Leistungs-Halbleiterelektronik gebildet wird.

**12.** Wirbelstrombremse nach einem der Ansprüche 9 bis 11, **dadurch gekennzeichnet, daß** die Stromstärke oder mittlere Stromstärke in einem geschlossenen Regelkreis regelbar ist.

**Claims**

**1.** Method of controlling and/or regulating an eddy-current brake (120), particularly on a rail vehicle, comprising the following steps:

1.1 a speed of the vehicle is detected;
1.2 a limit temperature T$_{GBB}$ for service brake applications is set by means of the eddy-current brake as a function of at least the running speed;
1.3 when the set limit temperature T$_{GBB}$ is reached the eddy-current brake for service brake applications is switched off or relieved.

**2.** Method according to Claim 1, **characterised in that** said limit temperature for service brake applications T$_{GBB}$ is detected and set anew before each and/or during the application of the service brake.

**3.** Method according to Claim 1 or 2, **characterised in that** said limit temperature for service brake applications T$_{GBB}$ is set as a function of at least one or several of the following parameters:

- the outside temperature
- the permissible maximum speed in a track section.

**4.** Method according to any of the Claims 1 to 3, **characterised in that** the function for detection of said limit temperature T$_{GBB}$ is a polynomial or a straight line.

**5.** Method according to Claim 4, **characterised in that** the function presents a negative gradient at least over a substantial velocity range.

**6.** Method according to any of the Claims 4 or 5, **characterised in that** the parameters (a, b, c, ...) of the function f(v) = a + bv + cv$^2$ + ... are detected as a function of the selection of the following characteristics:

- acceleration capacity of the train
- temperature characteristics of the brake (heating/cooling)
- time delay in the case of emergency brake application.

**7.** Eddy-current brake including a control/regulating device for carrying through the method according to any of the Claims 1 to 6, comprising:

> means for detecting the running speed (114),
> means for detecting brake demands,
> a controller.

with the controller/regulating device being **characterised in that** a limit temperature for service brake applications $T_{GBB}$ is set as a function of the running speed in said controller (110) and that said controller switches off or relieves said eddy current brake when the limit temperature for service brake applications $T_{GBB}$ is reached due to the temperature increase caused by the brake demand.

8. Eddy-current brake according to Claim 7, **characterised in that** means are provided for detecting the temperature increase caused by the brake demand.

9. Eddy-current brake disposed above the rail head on a rail vehicle, comprising several pole bodies as well as
several coils for generating a magnetic flux through said pole bodies and said rail head,
**characterised in that** the eddy-current brake (120) comprises a control or regulating device (110) that is used to vary or disrupt said magnetic flux as a function of a limit temperature for service brake applications $T_{GBB}$, which is specified at least in response to the speed.

10. Eddy-current brake according to Claim 9. **characterised in that** said control/regulating device of the eddy-current brake is integrated into the brake control system on the side of the train.

11. Eddy-current brake according to Claim 9 or 10, **characterised in that** said control/regulating device is a current regulator that is constituted by a semiconductor electronic power system.

12. Eddy-current brake according to any of the Claims 9 to 11, **characterised in that** the current intensity or the mean current intensity can be controlled within a closed feedback control loop.

**Revendications**

1. Procédé de commande et/ou de régulation d'un frein (120) à courants de Foucault, notamment sur un véhicule ferroviaire, comprenant les stades suivants :

> 1.1 on détermine la vitesse du véhicule ;
> 1.2 en fonction d'au moins la vitesse du véhicule, on fixe une température $T_{GBB}$ limite pour des freinages de service par le frein à courants de Foucault
1.3 lorsque la température $T_{GBB}$ limite fixée est atteinte, on met le frein à courants de Foucault hors circuit pour des freinages de service ou on le retire.

2. Procédé suivant la revendication 1, **caractérisé en ce que** l'on redétermine et refixe la température limite pour des freinages $T_{GBB}$ de service avant chaque freinage de service et/ou pendant le freinage de service.

3. Procédé suivant la revendication 1 ou 2, **caractérisé en ce que** l'on fixe la température limite pour des freinages $T_{GBB}$ de service en fonction d'au moins une autre des grandeurs suivantes ou de plusieurs des grandeurs suivantes :

> - la température extérieure
> - la plus grande vitesse admissible sur une section de ligne.

4. Procédé suivant l'une des revendications 1 à 3, **caractérisé en ce que** la fonction de détermination de la température $T_{GBB}$ limite est un polynôme ou une droite.

5. Procédé suivant la revendication 4, **caractérisé en ce que** la fonction a une pente négative au moins sur un domaine sensible de vitesse.

6. Procédé suivant l'une des revendications 4 ou 5, **caractérisé en ce que** l'on détermine les paramètres (a, b, c...) de la fonction $f(v) = a + bv + cv^2 + ...$ en fonction d'une sélection de propriétés suivantes :

> - pouvoir d'accélération du train
> - comportement à la température du frein (échauffement/refroidissement)
> - retard en cas de freinage rapide.

7. Frein à courants de Foucault comprenant un dispositif de commande/régulation pour la mise en oeuvre du procédé suivant l'une des revendications 1 à 6, comprenant

> des moyens (114) de détection de la vitesse du véhicule,
> des moyens de détection du freinage exigé,
> un appareil de commande,
> le dispositif de commande/régulation est **caractérisé en ce qu'**il est fixé en fonction de la vitesse du véhicule dans l'appareil (110) de commande une température limite $T_{GBB}$ pour des freinages de service et l'appareil de commande met le frein à courants de Foucault hors circuit ou le retire si la température limite $T_{GBB}$

pour des freinages de service est atteinte en raison d'une élévation de température provoquée par le freinage exigé.

8. Frein à courants de Foucault suivant la revendication 7, **caractérisé en ce qu'**il est prévu des moyens de détection de l'élévation de la température provoquée par les exigences de freinage exigé.

9. Frein à courants de Foucault qui est placé au-dessus du champignon de rail sur un véhicule ferroviaire comprenant

   plusieurs noyaux polaires ainsi que
   plusieurs bobines de production d'un flux magnétique dans les noyaux polaires et le champignon de rail ;
   **caractérisé en ce que** le frein (120) à courants de Foucault comprend un dispositif (110) de commande ou de régulation par lequel le flux magnétique peut être modifié ou interrompu en fonction d'une température limite $T_{GBB}$ pour des freinages de service, qui peut être prescrite au moins sur la base de la vitesse.

10. Frein à courants de Foucault suivant la revendication 9, **caractérisé en ce que** le dispositif de commande/régulation du frein à courants de Foucault est intégré dans la commande de frein du côté du train.

11. Frein à courants de Foucault suivant la revendication 9 ou 10, **caractérisé en ce que** le dispositif de commande ou de régulation est un régulateur de courant, qui est formé par une électronique à semiconducteur de puissance.

12. Frein à courants à Foucault suivant l'une des revendications 9 à 11, **caractérisé en ce que** l'intensité du courant ou l'intensité moyenne du courant peut être réglée dans un circuit fermé de régulation.

FIG.1

v [km/h]

— — Anzugskraft
——— Bremskraft

FIG. 2

# FIG.3

EP 0 988 206 B1

# FIG.4

# FIG.5

## FIG.6

## FIG.7